# EUROPÄISCHE PATENTSCHRIFT

(11) **EP 2 158 775 B1**
(45) Veröffentlichungstag und Bekanntmachung des Hinweises auf die Patenterteilung: **11.05.2011**
(21) Anmeldenummer: 08758476.9
(22) Anmeldetag: 13.05.2008
(51) Int. Cl.: H04W 24/06

(54) **VERFAHREN UND SYSTEM ZUM ZEITLICH WECHSELNDEN ZUORDNEN VON BASISSTATIONSSIGNALEN AUF EINE BEGRENZTE ANZAHL VON KANÄLEN EINES TESTGERÄTS**
METHOD AND SYSTEM FOR ALTERNATELY ALLOCATING BASE STATION SIGNALS TO A LIMITED NUMBER OF CHANNELS OF A TEST DEVICE
PROCÉDÉ ET SYSTÈME D'ALLOCATION VARIABLE DANS LE TEMPS DE SIGNAUX DE STATION DE BASE À UN NOMBRE LIMITÉ DE CANAUX D'UN DISPOSITIF DE TEST

(30) Priorität: 27.06.2007 DE 102007029718; 21.02.2008 DE 102008010300
(43) Veröffentlichungstag der Anmeldung: 03.03.2010
(73) Patentinhaber: Rohde & Schwarz GmbH & Co. KG, 81671 München (DE)
(72) Erfinder: HUBER, Rolf, 82256 Fürstenfeldbruck (DE); SANDHÄGER, Stephan, 82110 Germering (DE); SCHATZ, Walter, 85635 Höhenkirchen (DE)
(74) Vertreter: Beder, Jens
(86) Internationale Anmeldenummer: PCT/EP2008/003812
(87) Internationale Veröffentlichungsnummer: WO 2009/000365

(56) Entgegenhaltungen:
- WO-A-02/082670
- WO-A-2005/006010
- GB-A- 2 386 295
- US-A1- 2004 160 927
- US-B1- 6 421 793

## Beschreibung

Die Erfindung betrifft ein Verfahren und ein System zum Testen von Mobilfunkgeräten und insbesondere ein Verfahren, um in realen Funkszenarien aufgezeichnete Signalfolgen mehrerer Basisstationen einer begrenzten Anzahl von Kanälen eines Testgeräts zeitlich wechselnd zuzuordnen und abzuspielen.

Aus dem Stand der Technik sind Verfahren und Vorrichtungen zum Testen von Mobilfunkgeräten bekannt. Dabei wird ein Testnetz erzeugt, indem ein oder mehrere Sendekanäle des Testgeräts Signale gemäß dem zu testenden Mobilfunkstandard aussenden und somit eine oder mehrere Basisstationen des Mobilfunknetzes nachbilden.

Das zu testende Mobilfunkgerät empfängt die Signale, interpretiert und verarbeitet sie und schickt Antwortsignale zurück, die mit dem Empfangsteil des Testgeräts aufgenommen werden. Das Testgerät interpretiert diese und vergleicht sie mit den erwarteten Werten und Signalen. Die Kommunikation zwischen Mobilfunkgerät und Basisstation kann auch vom Mobilfunkgerät initiiert werden, so dass die Basisstation die antwortende Komponente wird. Die Auswertung kann sich auf verschiedene Funktionen des Mobilfunkgeräts beziehen. So kann durch die Analyse der Bitfehlerrate die Funktionsfähigkeit und Qualität der Funkübertragungskomponenten des Mobilfunkgeräts überprüft werden. Ein solches Messverfahren und eine entsprechende Vorrichtung sind in DE 10 2005 048 448 A1 beschrieben.

Zum anderen können die im Funksignal übermittelten Signalisierungsnachrichten ausgewertet werden. In den Mobilfunkstandards ist für jede Interaktion des Teilnehmers bzw. des Mobilfunkgeräts mit dem Mobilfunknetz, wie zum Beispiel dem Einbuchen in eine neue Funkzelle oder der Meldung des Aufenthaltsorts, eine genaue Abfolge von Signalisierungsnachrichten festgelegt. Das Testgerät erstellt aus den empfangenen Funksignalen des Mobilfunkgeräts die Signalisierungsmeldungen und vergleicht deren Inhalt und ihre zeitliche Abfolge mit dem erwarteten Verlauf.

Die oben beschriebene Überprüfung der Mobilfunkgeräte auf ein standardkonformes Verhalten wird mehrfach während der Entwicklung und Produktion von Mobilfunkgeräten durchgeführt. Die für den Test verwendeten Signalfolgen werden herkömmlicher Weise im Labor aus Signalbausteinen erstellt.

Die WO 02/082670 A2 offenbart ein Verfahren und System zum Testen eines Mobilfunkgeräts mittels eines Testgeräts, bei dem mobilfunktypische Signalfolgen mehrerer Basisstationen aus in einem existierenden Funkfeld ermittelten Daten erzeugt werden, die Signalfolge jeweils einer Basisstation zu jeweils einem von mehreren Sende-/Empfangskanälen zugeordnet werden, und die vom zu testenden Mobilfunkgerät zurückgesendeten Signale analysiert werden.

Für den Benutzer von Mobiltelefonen und somit auch für die Netzwerkbetreiber und Mobiltelefonhersteller ist in erster Linie der fehlerfreie Betrieb eines Mobilfunkgeräts im realen Netzwerk wichtig. Hier liegen weit komplexere Funkfelder, durch die Überlagerung von Signalfolgen einer Vielzahl von Basisstationen, vor als bei oben beschriebenen Testverfahren und Testvorrichtungen. Die Überprüfung des Verhaltens eines Mobilfunkgeräts in einem realen Netz nennt man Interoperabilitätstest.

Interoperabilitätstests werden entweder in speziellen Labors der Netzinfrastrukturhersteller oder aber im realen Feld mit allen dort vorherrschenden Bedingungen durchgeführt. Diese Tests sind durch das Anmieten von Testnetzen sehr teuer und ein Fehlerfall ist aufgrund von sich laufend ändernden Randbedingungen wie Sendeleistung und Auslastung der Basisstationen nicht mehr reproduzierbar.

Daher werden die Signalfolgen der Basisstationen vorzugsweise in einem realen Netz mit Hilfe eines Testmobilfunkgeräts und/oder speziellen Funkmessgeräten wie beispielsweise Netzwerkscannern aufgezeichnet. Testmobilfunkgerät oder präpariertes Mobilfunkgerät im Sinne der vorliegenden Erfindung sind allgemein Mobilfunkgeräte, die über eine Schnittstelle zur Ausgabe von Informationen über Nachrichten und Daten verfügen, die in einem regulären Netzbetrieb über die Funkschnittstelle zwischen dem Mobilfunkgerät und der Basissektion ausgetauscht werden. Ferner werden über dieselbe Schnittstelle Daten übermittelt, die weitere Funkkanalinformationen betreffen. Zum späteren Testen eines zu testenden Mobilfunkgeräts werden dann die aufgezeichneten Signalfolgen der Basisstationen den Sendekanälen des Testgeräts zugewiesen und abgespielt.

Da die Anzahl der aufgenommenen Basisstationen meist höher ist als die Anzahl der physikalischen Sendekanäle auf dem Testgerät, kann das reale Funkfeld nur unvollständig reproduziert werden.

Die Aufgabe ist, ein Verfahren und ein System zu entwickeln, das es erlaubt, Mobilfunkgeräte unter möglichst realen Funkbedingungen zu testen, in denen Signalfolgen von beliebig vielen Basisstationen durch das Testgerät abgespielt werden können.

Die Aufgabe wird in vorteilhafter Weise durch ein Verfahren nach Anspruch 1 und ein System nach Anspruch 9 gelöst.

Bei dem erfindungsgemäßen Verfahren werden im ersten Verfahrensschritt Signalfolgen mehrerer Basisstationen erstellt, die einem Mobilfunkstandard oder einer Mobilfunkspezifikation entsprechen. Die Anzahl erstellter Basisstationssignalfolgen übersteigt hierbei die Anzahl der Sendekanäle im Testgerät. In einem zweiten Schritt wird jedem der mehreren Sendekanäle des Testgeräts die Signalfolge jeweils genau einer der mehreren Basisstationen zugeordnet. Um die Signalfolgen einer größeren Anzahl von Basisstationen im Testgerät abspielen zu können, wird im dritten Schritt die Zuordnung der Signalfolge zumindest einer der mehreren Basisstationen zu mindestens einem der mehreren Sendekanäle des Testgeräts nach Ablauf einer definierten Zeit oder bei Vorliegen eines anderen Wechselkriteriums geändert. Im vierten Schritt empfängt und analysiert das Testgerät die vom zu testenden Mobilfunkgerät zurückgesendeten Signale.

Von besonderem Vorteil ist es, die mobilfunkspezifischen Signalfolgen der Basisstationen eines existierenden Funkfeldes während einer Testfahrt mittels Funknetzanalysator und/oder Testmobilfunkgerät aufzuzeichnen und daraus die Signalfolgen der Basisstationen für das Testgerät zu erstellen. Alternativ können die Signalfolgen auch bei einem Labor-Interoperabilitätstest aufgezeichnet werden. Anstelle der Signalfolgen kann zur Bearbeitung und Zuordnung der zu erteilenden Signalfolgen auch die hierzu durch das Testgerät abzuarbeitende Befehlsfolge verwendet werden. Der Einfachheit halber wird nachfolgend nur der Begriff "Signalfolge" stellvertretend verwendet.

Besonders vorteilhaft ist es, aus der Gesamtheit der aufgezeichneten Signalfolgen die Signalfolgen einzelner Basisstationen auszuwählen und entsprechend ihrer Bedeutung zu kennzeichnen. Die Signalfolge einer Basisstation mit hoher Bedeutung wird bevorzugt einem von mehreren Sendekanälen zugewiesen. Dadurch können besonders wichtige Basisstationen hervorgehoben werden. "Hohe Bedeutung" kann z.B. bei Vorliegen einer hohen Sendeleistung zugewiesen werden. Damit werden durch das Testgerät jeweils die Signalfolgen der Basisstationen mit den stärksten Signalen erzeugt.

Des Weiteren ist es vorteilhaft, Teile der Signalfolgen einzelner Basisstationen zu verändern, um beispielsweise Parametermodifikationen vorzunehmen. Darüber hinaus werden ganze Signalisierungsabläufe hinzugefügt, falls diese in der aufgezeichneten Signalfolge nicht enthalten oder nicht verwendbar sind.

Von besonderem Vorteil ist es, die Signalfolgen mit der aufgezeichneten Signalleistung und in der aufgezeichneten Zeitabfolge vom Sendekanal auszusenden.

Die aufgenommenen Signalfolgen können z. B. dem GSM, UMTS Standard WiMax, LTE oder einem anderen Standard entsprechen.

Ein besonders vorteilhaftes System umfasst eine Schnittstelle zu einem Funknetzanalysator und/oder einem Testmobilfunkgerät, eine Einleseeinheit zum Einlesen und Speichern der Signalfolgen von mehreren Basisstationen, eine Sende- und Empfangseinheit mit mehreren Sende- und Empfangskanälen sowie einer Zuordnungseinheit, die die Signalfolge jeweils einer Basisstation oder eine daraus erzeugte Befehlsfolge mindestens einem der mehreren Sendekanäle zuordnet. Der zeitliche Wechsel der Zuordnung zwischen Basisstationssignalfolge und Sendekanal wird durch eine Wechseleinheit gesteuert. In der Auswerteeinheit werden nun die vom Mobilfunkgerät zurückgesandten Meldungen analysiert.

Eine bevorzugte Ausführungsform der Erfindung ist in der Zeichnung dargestellt und wird in der nachfolgenden Beschreibung näher erläutert. Es zeigen:
- Fig.1: die Darstellung eines Mobilfunktestablaufs gemäß dem erfindungsgemäßen Verfahren unter Verwendung der erfindungsgemäßen Vorrichtung und
- Fig.2: die schematische Darstellung einer möglichen zeitlich wechselnden Zuordnung der Signalfolgen der Basisstationen zu den Sendekanälen des Testgeräts

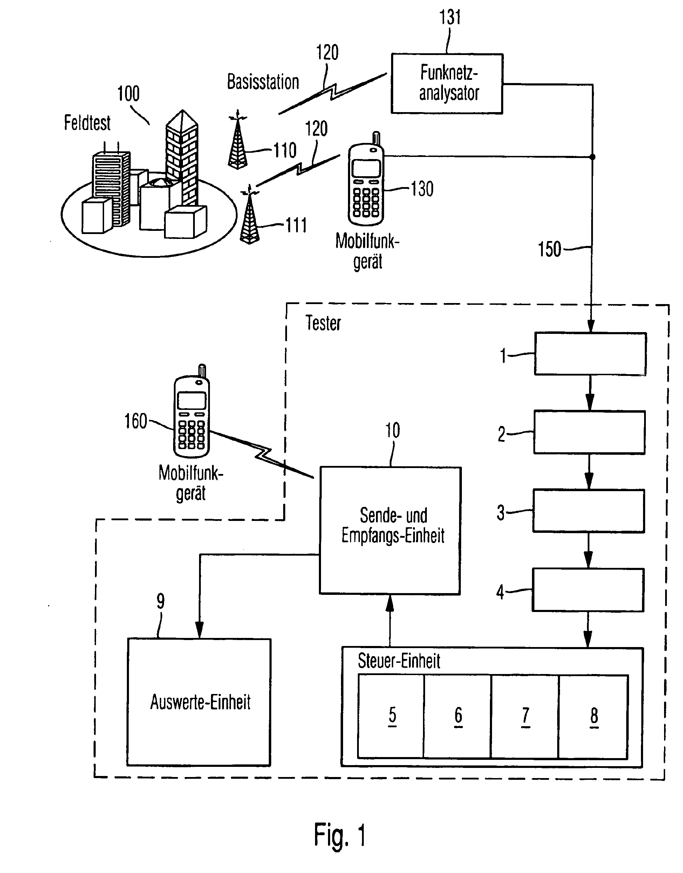

Figur 1 zeigt den gesamten Ablauf am Beispiel eines Mobilfunkgerätetests unter realen Funkbedingungen von der Erstellung von Signalfolgen mehrerer Basisstationen 110, 111 durch die Aufzeichnung eines realen Funkfeldes während einer Testfahrt, dem Einlesen und Bearbeiten der Signalfolgen, der Steuerung der Sendekanäle und dem Auswerten der vom zu testenden Mobilfunkgerät zurückgesandten Signalen.

Das Funkfeld eines Mobilfunknetzes 120 setzt sich aus den abgestrahlten Signalfolgen einer oder mehrerer Basisstationen 110, 111 zusammen. Die Signalfolgen können von Basisstationen des gleichen aber auch verschiedener Mobilfunkbetreiber stammen, unterschiedliche Signalleistungen aufweisen und auch unvollständig sein. Die Zusammensetzung des Funkfelds ändert sich mit dem Ort und mit der Zeit.

Ein für die Aufzeichnung präpariertes Mobilfunkgerät 130 empfängt fortlaufend diese Signalfolgen, wertet sie nach Signalleistung und Zugehörigkeit zu einem Mobilfunkbetreiber aus und sendet Signale an eine Basisstation zurück, das heißt, es bucht sich in die Basisstation ein. Daten die Verbindung betreffend werden unter Verwendung einer Schnittstelle des Mobilfunkgeräts 130 aufgezeichnet. So tauschen Mobilfunkgerät 130 und Basisstation Signalierungsnachrichten gemäß einem Mobilfunkstandard aus, um sich zum Beispiel in einem Netz anzumelden oder ein Gespräch aufzubauen. Bewegt sich das Testmobilfunkgerät 130, ändern sich die Signalleistung und die Zusammensetzung der Signale im Funkfeld und es muss sich gegebenenfalls in Zellen einer anderen Basisstation einbuchen. So empfängt das Testmobilfunkgerät während der Testfahrt eine beliebig große Anzahl von Basisstationen und tritt mit ihnen in Wechselwirkung.

Um ein zu testendes Mobilfunkgerät 160 unter solchen realen Bedingungen testen zu können, wird das Funkfeld während einer Testfahrt mittels des präparierten Mobilfunkgeräts 130 und/oder eines Netzwerkanalysators 131 gemessen, aufgezeichnet und in eine für das im Test verwendete Testgerät zum Abspielen der Signalfolgen lesbare Form aufbereitet. Über eine Schnittstelle 150 werden die Signalfolgen der Basisstationen an eine Einleseeinheit 1 weitergegeben. Dort werden sie in eine lesbare Form aufbereitet und abgespeichert. Die Aufbereitung umfasst das Erzeugen von Befehlsfolgen zum Ansteuern des Testgeräts. In der Auswahleinheit 2 wird aus der Gesamtheit der aufgezeichneten Signalfolgen von Basisstationen eine einstellbare Anzahl von Signalfolgen von Basisstationen ausgewählt und entsprechend ihrer Bedeutung gekennzeichnet. Als Kriterium für die Bedeutung kann z.B. die Signalleistung oder die Zugehörigkeit zu einem bestimmten Mobilfunkstandard verwendet werden. Auch Kombinationen sind möglich. Diese Auswahl bildet das Testszenario für den Mobilfunkgerätetest.

In einer Editiereinheit 3 können in einer oder mehreren der ausgewählten Signalfolgen Parameter oder einzelne Meldungen geändert, ergänzt und gelöscht werden. Fehlende Signalisierungsabläufe, wie zum Beispiel das Einbuchen oder eine Authentisierung im Netz, werden in der Erweiterungseinheit 4 hinzugefügt.

Die für das Testszenario ausgewählten Signalfolgen von Basisstationen werden nun über die Kanäle der Sende- und Empfangseinheit 10 ausgestrahlt. Dabei weist die Zuordnungseinheit 5 zu einer bestimmten Zeit jeweils einem Kanal der Sende- und Empfangseinheit genau eine Signalfolge einer Basisstation zu.

Übersteigt die Gesamtheit der Signalfolgen der Basisstationen die Anzahl der vorhandenen Sendekanäle, wird durch die Wechseleinheit 6 nach einer vorbestimmten Zeit oder bevorzugt nach Bedarf einem oder mehreren der vorhandenen Kanäle eine oder mehrere andere Signalfolgen neu zugewiesen. Der Bedarf kann zum Beispiel bei einem sog. Handover auftreten. Hierzu kann beispielsweise das Signal einer neu hinzukommenden Nachbarzelle erforderlich sein. Dabei werden besonders wichtige Signalfolgen von Basisstationen häufiger einem Kanal zugewiesen. Sind im Testszenario weniger Signalfolgen von Basisstationen als Sendekanäle vorhanden, bleiben die überzähligen Sendekanäle unbelegt. Die belegten und die unbelegten Sendekanäle können auch zeitlich wechseln. Einflüsse der einzelnen Sendekanäle können damit unterdrückt werden.

Beim Wechsel der Zuordnungen kann beispielsweise die Bedeutung, die für die Signalfolgen der einzelnen Basisstationen des realen Funkfelds gekennzeichnet wurden, herangezogen werden. Wird als Kriterium für die Bedeutung die Signalstärke einer Signalfolge einer jeden Basisstation herangezogen, so kann beispielsweise jeweils nach Verstreichen eines vordefinierten und/oder einstellbaren Zeitraums eine Überprüfung erfolgen, ob sich an der Reihenfolge beginnend mit der größten Signalstärke eine Änderung ergeben hat. Liegt eine Änderung vor, so werden die einzelnen Sende-/Empfangskanäle des Testgeräts gemäß der aktualisierten Reihenfolge mit den Signalfolgen der Basisstationen belegt. Hierzu werden zunächst anhand der Signalstärke die Signalfolgen der Basisstationen sortiert, beginnend mit der größten Signalstärke. Zur Kennzeichnung mit einer Bedeutung können auch mehrere Kriterien zusammengefasst werden. So ist es beispielsweise möglich, mehrere Gruppen zu bilden, wobei zu einer Gruppe jeweils nur die Signalfolgen von Basisstationen gehören, die einem bestimmten Mobilfunkstandard angehören. Werden beispielsweise Mobilfunksignale im 1800 MHz-Netz und im 900 MHz-Netz empfangen, so bildet das 1800 MHz-Netz eine Gruppe und das 900 MHz-Netz eine zweite Gruppe. Innerhalb dieser beiden Gruppen erfolgt eine Sortierung anhand der gemessenen Signalstärke. Bei der Zuordnung der Signalfolgen einzelner Basisstationen zu den verfügbaren Sendekanälen des Testgeräts kann dann z. B. ausgewählt werden, dass entweder aus beiden Gruppen zumindest eine Signalfolge vorhanden sein muss, um beispielsweise die Existenz eines netzfremden Signals zu erzwingen. Andererseits kann auch eine Beschränkung auf lediglich eine Gruppe erwünscht sein, so dass nur die Signalfolge dieser einen Gruppe der Rangfolge der Bedeutung entsprechend, den verfügbaren Sende-/Empfangskanälen zugeordnet werden.

Die neue Zuordnung kann dabei jeweils nach einem vordefinierten Zeitintervall erfolgen, um sprunghafte Änderungen der Zuordnungen zu vermeiden. Alternativ ist es auch möglich, bei jeder Aktualisierung der Reihenfolge, die sich aus den gemessenen Signalstärken ergibt, unmittelbar eine Neuzuordnung zu den Sende-/Empfangskanälen vorzunehmen.

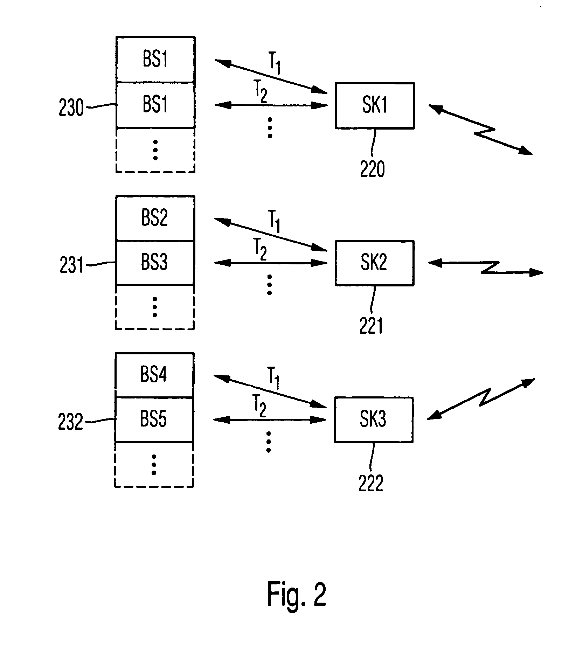

Ein mögliches Schema der zeitlich variierenden Zuordnung der Gesamtheit der Signalfolgen der Basisstationen eines Testszenarios zu den Kanälen des Testers wird in Figur 2 aufgezeigt.

Um das reale Funkfeld besonders genau nachzubilden, regelt die Signalleistungseinheit 7 die Sendeleistung einer jeden Signalfolge entsprechend der aufgezeichneten Sendeleistungswerte. Die zeitliche Abfolge der Signale innerhalb einer Signalfolge wird durch die Zeitsteuerungseinheit 8 gesteuert.

Das zu testende Mobilfunkgerät 160 empfängt somit ein wirklichkeitsnahes Funkfeld, verarbeitet und interpretiert die Signale und sendet Antwortsignale zurück. Diese werden von der Sende- und Empfangseinheit 10 aufgenommen und in der Auswerteeinheit 9 bearbeitet.

In Figur 2 ist ein Beispiel für den zeitlichen Wechsel der Zuordnung zwischen verfügbaren Sendekanälen und den Signalfolgen der Basisstationen des Testszenarios.

Der dargestellten Mobilfunktester umfasst drei Sendekanäle 220, 221, 222. Die Signalfolgen der Basisstationen BS1, BS2, BS3, BS4 und BS5 bilden das Testszenario. Innerhalb des Zeitintervalls T1 ist die Signalfolge der Basisstation BS1 dem Sendekanal SK1 220, die Signalfolge der Basisstation BS2 dem Sendekanal SK2 221 und die Signalfolge der Basisstation BS4 dem Sendekanal SK3 222 zugeordnet. Im darauffolgenden Zeitintervall T2 wechselt die Zuordnung in der Weise, dass die Signalfolge der Basisstation BS1 weiterhin dem Sendekanal SK1 220, die Signalfolge der Basisstation BS3 dem Sendekanal SK2 221 und die Signalfolge der Basisstation BS5 dem Sendekanal SK3 222 zugeordnet ist. Der besonderen Bedeutung der Signalfolge der Basisstation BS1 z.B. als Basisstation mit der größten Signalstärke wird dadurch Rechnung getragen, dass sie sowohl während des Zeitintervalls T1 also auch T2 gesendet wird.

Sollen weitere Signalfolgen einer oder mehrerer Basisstationen gesendet werden können diese in der Liste der zu sendenden Signalfolgen von Basisstationen auf Sendekanal SK1 230, der Liste der zu sendenden Signalfolgen von Basisstationen auf Sendekanal SK2 231 sowie der Liste der zu sendenden Signalfolgen von Basisstationen auf Sendekanal SK3 232 hinzugefügt werden und der Test um ein Zeitintervall T3 verlängert werden. Die Erfindung ist nicht auf das dargestellte Ausführungsbeispiel beschränkt. Insbesondere sind einzelne Merkmale des Ausführungsbeispiels miteinander kombinierbar.

## Patentansprüche

1. Verfahren zum Testen eines Mobilfunkgeräts mittels eines Testgeräts mit folgenden Verfahrensschritten:
- Erzeugen von mobilfunktypischen Signalfolgen mehrerer Basisstationen (110, 111), aus in einem existierenden Funkfeld ermittelten Daten
- Zuordnung der Signalfolge jeweils einer Basisstation (110, 111) zu jeweils einem von mehreren Sende-/Empfangskanälen des Testgeräts
- Zeitlicher Wechsel der Zuordnung der Signalfolge zumindest einer der Basisstationen (110, 111) zu mindestens einem der mehreren Sendekanäle des Testgeräts
- Analyse der vom zu testenden Mobilfunkgerät (100) zurückgesendeten Signale,
**dadurch gekennzeichnet,**
**dass** die Signalfolge einer Basisstation hinsichtlich ihrer Bedeutung **gekennzeichnet** wird und
**dass** ein zeitlicher Wechsel der Zuordnung zumindest einer der Signalfolgen der mehreren Basisstationen zu mindestens einem der mehreren Sendekanäle des Testgeräts in Abhängigkeit von der Bedeutung der Signalfolge erfolgt.

2. Verfahren nach Anspruch 1,
**dadurch gekennzeichnet,**
**dass** die mobilfunktypischen Signälfolgen aus einem,
während einer Testfahrt aufgezeichnetem, realen Funkfeld (100) oder einem in einem Labor erzeugten Funkfeld erzeugt werden.

3. Verfahren nach Anspruch 1 oder 2,
**dadurch gekennzeichnet,**
**dass** Funkszenarien mittels eines Funknetzanalysators (131) und/oder eines Testmobilfunkgeräts (130) aufgezeichnet werden.

4. Verfahren nach einem der Ansprüche 1 bis 3,
**dadurch gekennzeichnet,**
**dass** aus der Gesamtheit der Signalfolgen die Signalfolgen einzelner Basisstationen (110, 111) ausgewählt werden.

5. Verfahren nach Anspruch 4,
**dadurch gekennzeichnet,**
**dass** den Sende-/Empfangskanälen des Testgeräts jeweils die Signalfolgen derjenigen Basisstationen (110, 111) zugeordnet werden, die die größte Sendeleistung aufweisen.

6. Verfahren nach einem der Ansprüche 1 bis 5,
**dadurch gekennzeichnet,**
**dass** Teile der Signalfolgen einzelner Basisstationen (110, 111) verändert werden.

7. Verfahren nach einem der Ansprüche 1 bis 6,
**dadurch gekennzeichnet,**
**dass** die Signalleistungen der aufgezeichneten Signalfolgen reproduziert werden.

8. Verfahren nach einem der Ansprüche 1 bis 7,
**dadurch gekennzeichnet,**
**dass** die Signalfolgen in ihrer aufgezeichneten Zeitabfolge gesendet werden.

9. System zum Testen eines Mobilfunkgeräts das eine Einleseeinheit (1) zum Einlesen und Speichern von mobilfunktypischen Signalfolgen mehrerer Basisstationen, einen Tester mit mehreren Sende-/Empfangskanälen, einer Zuordnungseinheit (5) zur Zuordnung von Signalen jeweils einer Basisstation (110, 111) zu jeweils einem der mehreren Sendekanäle im Tester, eine Wechseleinheit (6) die den zeitlichen Wechsel der Zuordnung der Signalfolge zumindest einer der mehreren Basisstationen (110, 111) zu mindestens einem der mehreren Sendekanäle des Testgeräts steuert und eine Auswerteeinheit (9) zum Analysieren der vom zu testenden Mobilfunkgerät (160) zurückgesandten Meldungen umfasst,
**dadurch gekennzeichnet,**
**dass** der Tester eine Auswahleinheit (2) zur Kennzeichnung einer Bedeutung der Signalfolgen umfasst und die Wechseleinheit (6) so eingerichtet ist, dass der zeitliche Wechsel der Zuordnung in Abhängigkeit von der Bedeutung der Signalfolge erfolgt.

10. System nach Anspruch 9,
**dadurch gekennzeichnet,**
**dass** das System eine Auswahleinheit enthält, welche so eingerichtet ist, dass aus der Gesamtheit der mobilfunktypischen Signalfolgen die Signalfolgen einzelner Basisstationen (110, 111) ausgewählt und entsprechend ihrer Bedeutung **gekennzeichnet** werden.

11. System nach einem der Ansprüche 9 oder 10,
**dadurch gekennzeichnet,**
**dass** eine Editiereinheit (3) so eingerichtet ist, dass Teile der Signalfolgen einzelner Basisstationen (110, 111) verändert werden können.

12. System nach einem der Ansprüche 9 bis 11,
**dadurch gekennzeichnet,**
**dass** eine Korrektureinheit so eingerichtet ist, dass der aufgezeichneten Signalfolge Signalisierungsabläufe hinzugefügt werden.

13. System nach einem der Ansprüche 9 bis 12,
**dadurch gekennzeichnet,**
**dass** sie eine Zeitsteuerungseinheit (8) enthält, welche so eingerichtet ist, dass sie das Senden der Signale einer mobilfunktypischen Signalfolge gemäß ihrer aufgezeichneten Zeitabfolge steuert.

## Claims

1. A method for testing a mobile-radio device by means of a test device with the following method steps:
- generation of typical mobile-radio signal sequences of several base stations (110, 111) from data determined in an existing radio field;
- allocation of the signal sequence of each base station (110, 111) respectively to one of several transmission/reception channels of the test device;
- time alternation of the allocation of the signal sequences of at least one of the base stations (110, 111) to at least one of the several transmission channels of the test device;
- analysis of the signals re-transmitted from the mobile-radio device (100) under test,
**characterised in that**
the signal sequence of a base station is marked with reference to its significance, and
that a time alternation of the allocation of at least one of the signal sequences of the several base stations to at least one of the several transmission channels of the test device is implemented dependent upon the significance of the signal sequence.

2. The method according to claim 1,
**characterised in that**
the typical mobile-radio signal sequences are generated from a real radio field (100) recorded during a test run or from a radio field generated in a laboratory.

3. The method according to claim 1 or 2,
**characterised in that**
radio scenarios are recorded by means of a radio-network analyser (131) and/or a test-mobile radio device (130).

4. The method according to any one of claims 1 to 3,
**characterised in that**
the signal sequences of individual base stations (110, 111) are selected from the totality of the signal sequences.

5. The method according to claim 4,
**characterised in that**
the signal sequences of those base stations (110, 111), which provide the greatest transmission power, are allocated respectively to the transmission/reception channels of the test device.

6. The method according to any one of claims 1 to 5,
**characterised in that**
parts of the signal sequences of individual base stations (110, 111) are varied.

7. The method according to any one of claims 1 to 6,
**characterised in that**
the signal powers of the recorded signal sequences are reproduced.

8. The method according to any one of claims 1 to 7,
**characterised in that**
the signal sequences are transmitted in their recorded time sequence.

9. A system for testing a mobile-radio device, which comprises
an input unit (1) for the input and storage of typical mobile-radio signal sequences of several base stations,
a tester with several transmission/reception channels,
an allocation unit (5) for the allocation of signals of each base station (110, 111) respectively to one of the several transmission channels in the tester,
an alternation unit (6) which controls the time alternation of the allocation of the signal sequence of at least one of the several base stations (110, 111) to at least one of the several transmission channels of the test device,
and an evaluation unit (9) for the analysis of messages re-transmitted from the mobile-radio device (160) under test,
**characterised in that**
the tester comprises a selection unit (2) for marking a significance of the signal sequences, and that the alternation unit (6) is set up in such a manner that the time alternation of the allocation is implemented dependent upon the significance of the signal sequence.

10. The system according to claim 9,
**characterised in that**
the system contains a selection unit, which is set up in such a manner that, from the totality of typical mobile-radio signal sequences, the signal sequences of individual base stations (110, 111) are selected and marked according to their significance.

11. The system according to any one of claims 9 or 10,
**characterised in that**
an editing unit (3) is set up in such a manner that parts of the signal sequences of individual base stations (110, 111) can be varied.

12. The system according to any one of claims 9 to 11,
**characterised in that**
a correction unit is set up in such a manner that signaling procedures are added to the recorded signal sequence.

13. The system according to any one of claims 9 to 12,
**characterised in that**
it contains a time-control unit (8), which is set up in such a manner that it controls the transmission of the signals of a typical mobile-radio signal sequence according to their recorded time sequence.

## Revendications

1. Procédé pour tester un appareil radio-téléphonique mobile au moyen d'un appareil de test avec les étapes de procédé suivantes:
- production de séquences de signaux typiques pour la radiotéléphonie de plusieurs stations de base (110, 111) à partir de données obtenues dans un champ hertzien existant
- allocation de la séquence de signaux respectivement d'une station de base (110, 111) à respectivement un de plusieurs canaux d'émission/réception de l'appareil de test
- changement dans le temps de l'allocation de la séquence de signaux au moins d'une des stations de base (110, 111) à au moins un de plusieurs canaux d'émission de l'appareil de test
- analyse des signaux renvoyés par l'appareil radiotéléphonique mobile (100) à tester,
**caractérisé en ce que** la séquence de signaux d'une station base, quant à sa signification, est **caractérisée** et
**en ce qu'**un changement dans le temps de l'allocation d'au moins une des séquences de signaux de plusieurs stations de base à au moins un de plusieurs canaux d'émission de l'appareil de test a lieu en fonction de la signification de la séquence de signaux.

2. Procédé selon la revendication 1, **caractérisé en ce que** les séquences de signaux typiques de la radio-téléphonie sont produites à partir d'un champ hertzien réel (100), enregistré pendant un trajet de test ou un champ hertzien produit dans un laboratoire.

3. Procédé selon la revendication 1 ou 2, **caractérisé en ce que** des scénarios hertziens sont enregistrés au moyen d'un analyseur de champ hertzien (131) et/ou d'un appareil radiotéléphonique mobile de test (130).

4. Procédé selon l'une des revendications 1 à 3, **caractérisé en ce qu'**à partir de l'ensemble des séquences de signaux, les séquences de signaux de stations de base individuelles (110, 111) sont sélectionnées.

5. Procédé selon la revendication 4, **caractérisé en ce que** sont alloués aux canaux d'émission/de réception de l'appareil de test respectivement les séquences de signaux des stations de base (110, 111) qui présentent la puissance d'émission la plus élevée.

6. Procédé selon l'une des revendications 1 à 5, **caractérisé en ce que** des parties des séquences de signaux de stations de base individuelles (110, 111) sont modifiées.

7. Procédé selon l'une des revendications 1 à 6, **caractérisé en ce que** les puissances de signaux des séquences de signaux enregistrées sont reproduites.

8. Procédé selon l'une des revendications 1 à 7, **caractérisé en ce que** les séquences de signaux sont émises dans leur succession enregistrée dans le temps.

9. Système pour tester un appareil radio-téléphonique mobile, qui comporte une unité de lecture (1) pour la lecture et le stockage de séquences de signaux typiques pour la radiotéléphonie de plusieurs stations de base, un testeur avec plusieurs canaux d'émission/de réception, une unité d'allocation (5) pour l'allocation de signaux respectivement d'une station de base (110, 111) à respectivement un de plusieurs canaux d'émission dans le testeur, une unité de changement (6) qui commande le changement dans le temps de l'allocation de la séquence de signaux d'au moins une de plusieurs stations de base (110, 111) à au moins un de plusieurs canaux d'émission de l'appareil de test, et une unité d'évaluation (9) pour l'analyse des informations renvoyées par l'appareil radio-téléphonique mobile à tester (160), **caractérisé en ce que** le testeur comprend une unité de sélection (2) pour la caractérisation d'une signification de la séquence de signaux, et l'unité de changement (6) est installée de façon à ce que le changement dans le temps de l'allocation ait lieu en fonction de la signification de la séquence de signaux.

10. Système selon la revendication 9, **caractérisé en ce que** le système comporte une unité de sélection qui est installée de façon à sélectionner de l'ensemble des séquences de signaux typiques pour la radio-téléphonie, les séquences de signaux de stations de base individuelles (110, 111) et à les caractériser en fonction de leur signification.

11. Système selon l'une des revendications 9 ou 10, **caractérisé en ce qu'**une unité d'édition (3) est installée de façon que des parties des séquences de signaux de stations de base individuelles (110, 111) puissent être modifiées.

12. Système selon l'une des revendications 9 à 11, **caractérisé en ce qu'**une unité de correction est installée de façon que des exécutions de signalisation soient ajoutés à la séquence de signaux enregistrée.

13. Système selon l'une des revendications 9 à 12, **caractérisé en ce qu'**il comporte une unité de commande de temps (8) qui est installée de façon à commander l'émission des signaux d'une séquence de signaux typiques pour la radio-téléphonie selon leur succession enregistrée dans le temps.
